# EUROPEAN PATENT APPLICATION

(11) **EP 1 383 351 A2**
(43) Date of publication of application: **21.01.2004**
(21) Application number: 03015388.6
(22) Date of filing: 08.07.2003
(51) Int. Cl.: H04Q 7/38

(54) **Device authentication system**

(30) Priority: 08.07.2002 JP 2002198719
(71) Applicant: MATSUSHITA ELECTRIC INDUSTRIAL CO., LTD., Kadoma-shi, Osaka 571-8501 (JP)
(72) Inventor: Minemura, Atsushi, Itabashi-ku, Tokyo 173-0031 (JP)
(74) Representative: Grünecker, Kinkeldey, Stockmair & Schwanhäusser Anwaltssozietät

(57) **Abstract**

A device authentication system that enables secure and reliable authentication of an entity that is a device without a secure area. In the system, memory device 10 authenticates cellular phone 20. In the system, memory device 10 holds key 12 in a secure area, cellular phone holds serial number 21 and generates a key from the serial number and identification information provided from a user; and memory device 10 makes a decision on conformity between key 12 held therein and the key generated in cellular phone 20 to authenticate cellular phone 20. In the authenticate processing, it is possible to limit the use of data stored in memory device 10 only to specific cellular phones.

## Description

### BACKGROUND OF THE INVENTION

### Field of the Invention

The present invention relates to a device authentication system and method for performing authentication between devices, the devices for implementing the method and a computer program for specifying operation of the devices, and more particularly, to enable external authentication of a device without a secure area required for storage of an authentication key.

### Description of the Related Art

Entity authentication is conventionally performed to confirm the identity of a communicating party or to confirm that a user who requests to connect a computer that provides file share service is a proper user to be given an access right.

There are various schemes of entity authentication. In a challenge/response scheme that is one of the schemes, for example, both concerned parties, A and B, have symmetry keys held in secrecy, one of the parties, A, generates random numbers (challenge) to provide to the other one of the parties, B, and B sends back a value (response) obtained by encrypting the random numbers using the symmetry key to A. A decodes the response using the symmetry key, and when there is no contradiction between the response and challenge, identifies Bis a proper party.

In recent years, there have been developed and on the market write/read control microcomputers that perform mutual authentication processing with memory devices having integrated CPU or coprocessor for encryption processing. The microprocessor has an integrated controller that controls write/read of a memory device, and under a device mounted with the microcomputer, performs mutual authentication with the memory device inserted into the apparatus.

Recently, a scheme has been studied of inserting a memory device into an internet-capable cellular telephone, and storing in the memory device contents of, for example, music, images and game Software acquired from a service server through the cellular telephone.

In this case, in order for the data stored in the memory device to be used only in the cellular telephone to which the data is downloaded, there is an idea of specifying cellular telephones capable of using memory devices. It is because a mobile telecommunications. carrier limits content delivery service to cellular telephones of contractors on which information fees are imposed, and thereby differentiates the carrier from competitors to increase the number of contractors.

It is possible to limit the use of memory device to specific cellular phones, by memory device performing entity authentication on a cellular phone, and when the cellular phone is not a target one/rejecting a response to the cellular phone.

It is possible for memory devices on which IC chips are embedded or secure devices such as IC cards to hold a symmetry key in secrecy. However, cellular phones without secure areas cannot hold a symmetry key in secrecy.

Further, there arise problems that by incorporating into a cellular phone a microcomputer that performs mutual authentication processing with the memory device, cellular phones are impaired in miniaturization and thinning and the cost is increased.

### SUMMARY OF THE INVENTION

It is an object of the present invention to provide a device authentication system enabling safe and reliable authentication of an entity that is a device without a secure area, and further provide a method of the authentication, devices that implement the method, and a computer program that specifies the operation.

The present invention achieves the above object by generating new authentication information (fourth authentication information) from authentication information (second authentication information) held in a second device and for example, authentication information (third authentication information) that a user inputs, and making a decision on conformity between the new authentication information and authentication information (first authentication information) held in a secure area of a first device.

According to an aspect of the invention, in a device authentication system in which a first device authenticates a second device, the first device has a transmission/reception section that transmits and receives information to/from the second device, a first information holding section that holds first authentication information in a secure area, and a decider that makes a decision on authentication, the second device has a transmission/reception section that transmits and receives information to/from the first device, a second information holding section that holds second authenticationinformation, an information acquirer that acquires third authentication information from outside of the second device, and an authentication information generator which generates fourth authentication information from the second authentication information and the third authentication information, and outputs the fourth authentication information to the first device through the transmission/reception section, and the decider makes a decision on conformity between the first authentication information and the fourth authentication information to authenticate the second device.

According to another aspect of the invention, in a device authentication method in which a first device authenticates a second device, the first device holds first authentication information in a secure area, the second device that holds second authentication information generates fourth authentication information form the second authentication information and third authentication information provided from outside of the second device, and the first device makes a decision on conformity between the first authentication information and the fourth authentication information to authenticate the second device.

According to still another aspect of the invention, a second device to be authenticated by a first device has a transmission/reception section that transmits and receives information to/from the first device, an information holding section that holds second authentication information, an information acquirer that acquires third authentication information from outside of the second device, and an authentication information generator which generates fourth authentication information from the second authentication information and the third authentication information, and outputs the fourth authentication information to the first device through the transmission/reception section.

According to a further aspect of the invention, a first device that authenticates a second device has a transmission/reception section that transmits and receives information to/from the second device, an information holding section that holds first authentication information in a secure area,and a decider that makes a decision on conformity between the fourth authentication information received in the transmission/reception section and the first authentication information.

According to still further aspect of the invention, a computer program specifies that a computer, which is integrated into a second device to be authenticated by a first device, executes the procedures of generating fourth authentication information from second authentication information that the second device holds and third authentication information acquired from outside of the second device, requesting an issue of random information to the first device, and encrypting the random information received from the first devide using the fourth authentication information to output to the first device.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1 is a diagram illustrating a configuration of a device authentication system in one embodiment of the present invention;
FIG. 2 is a diagram illustrating initial setting. procedures in the device authentication system in the one embodiment of the present invention;
FIG. 3 is a diagram illustrating an example of a configuration of a memory device in the device authentication system in the one embodiment of the present invention;
FIG. 4 is a diagram illustrating an example of a configuration of a cellular telephone in the device authentication system in the one embodiment of the present invention; and
FIG.5 is a diagram illustrating mutual authentication procedures in the device authentication system in the one embodiment of the present invention.

### DETAILED DESCRIPTION OF THE PREFERRED EMBODIMENTS

With reference now to the attached drawings, embodiments of the present invention will be explained, in detail below.

In a device authentication system of the present invention, device A authenticates device B according to a challenge/response scheme.

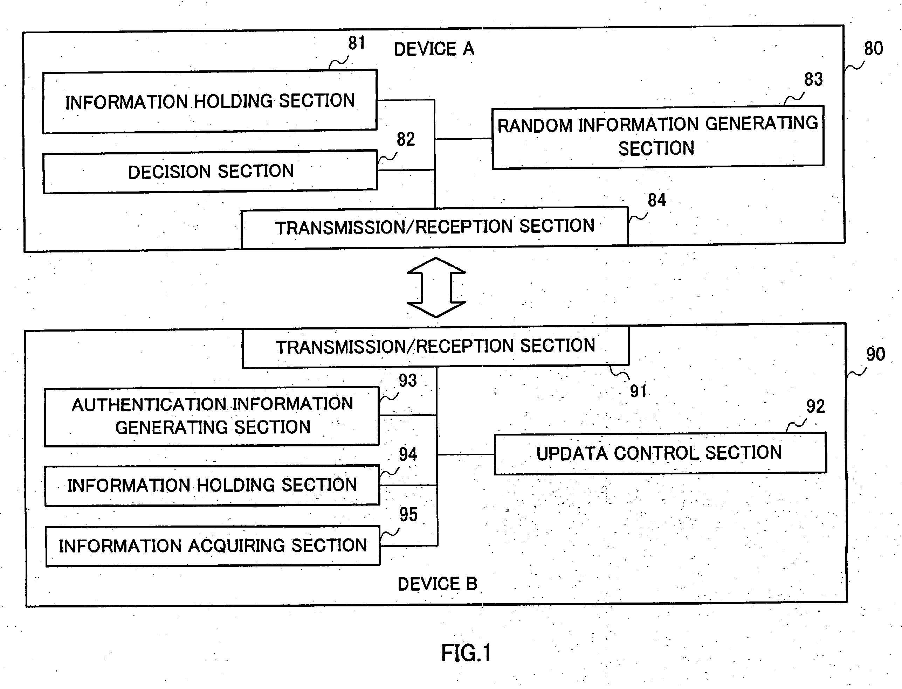

As illustrated in FIG. 1, device A80 has transmission/reception section 84 that transmits and receives information to/from device B90, information holding section 81 that holds first authentication information a secure area, decision section 82 that makes a decision on conformity between information (fourth authentication information) for authentication received in transmission/reception section 84 and the first authentication information, and random information generating section 83 that generates random information such as random numbers. Meanwhile, device B90 has transmission/reception section 91 that transmits and receives information to/from device A80, non-secure information holding section 94 that holds second authentication information, information acquiring section 95 which acquires third information from outside of device B90, authentication information generating section 93 which generates information (fourth authentication information) for authentication from the second authentication information and third authentication information, and outputs the fourth authentication information to device B80 through transmission/reception section 91, and update control section 92 that updates the second authentication information held in information holding section 94.

In the system, device B90 to be authenticated generates in authentication information generating section 93 information (fourth authentication information) for authentication from the second authentication information held in information holding section 94 and the third authentication information acquired in information acquiring section 95 from outside of device 890. When generating the fourth authentication information, device B90 requests device A80 to issue random information.

Upon receiving the request, device A80 generates the random information such as random numbers in random information generating section 83 to output to device B90.

Device B90 encrypts the random information received. from device A80 using the fourth authentication information to output to device A80.

In device A80, decision section 82 decodes the information received from device B90 using the first authentication information held in information holding section 81, verifies matching between the decoded information and the random information provided to device B90, makes a decision on conformity between the first authentication information and fourth authentication information, and when the conformity is approved, authenticates device B90.

When the authentication succeeds, in device B90, update control section 92 instructs information holding section 94 to hold the random information received from device A80 as the second authentication information for use in subsequent authentication. Further, key information that is new authentication information is generated from the random information and third authentication information, and is output to device A80 through transmission/reception section 91. Device A80 holds the key information as first authentication information for use in subsequent authentication in information holding section 81 that'is secure.

In addition, in the system, device B90 optionally authenticates device A80.

An embodiment will be described below in which device A that authenticates is a memory device, and device B to be authenticated is a cellular phone. In the device authentication system, the memory device and cellular phone perform mutual authentication according to the challenge/response scheme. A common key in the challenge/response scheme is generated dynamically from identification information input from a user and data stored in the cellular phone.

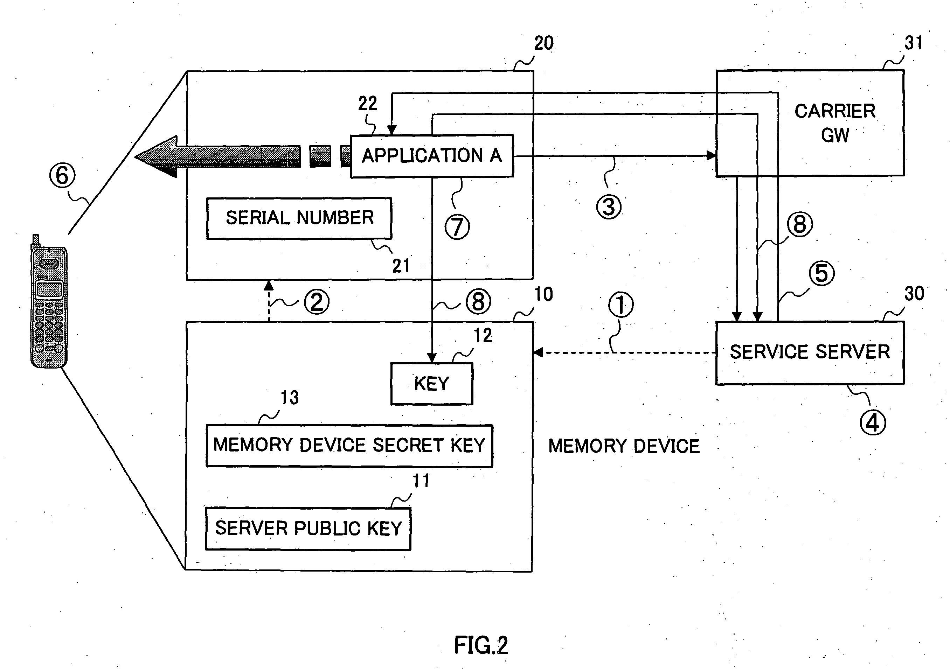

FIG.2 illustrates procedures where, when new memory device 10 is inserted into cellular phone 20, service server 30 that issues memory device 10 initially sets memory device 10 for key 12 in the challenge/response scheme.

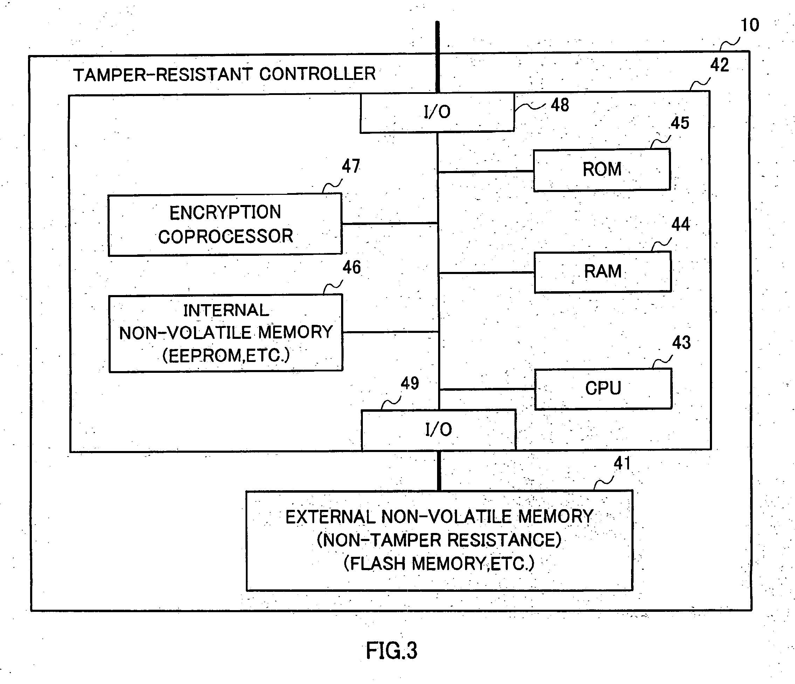

For example, as illustrated in FIG. 3, memory device 10 has memory 41 that stores the content downloaded from service server 30 and is composed of, for example, flash memory, and memory controller 42 with tamper-resistance that controls data write/read in memory 41. Memory controller 42 has CPU 43 that controls the operation of memory device 10, RAM 44 for use in a work area of CPU 43, ROM 45 that stores a program for specifying the operation of CPU 43, internal non-volatile memory 46 with tamper-resistance that is composed of, for example, EEPROM, encryption coprocessor 47 that performs calculation processing such as encryption processing instructed from CPU 43, input/output section (I/O) section 48 that communicates data with cellular phone 20, and I/O 49 with memory 41.

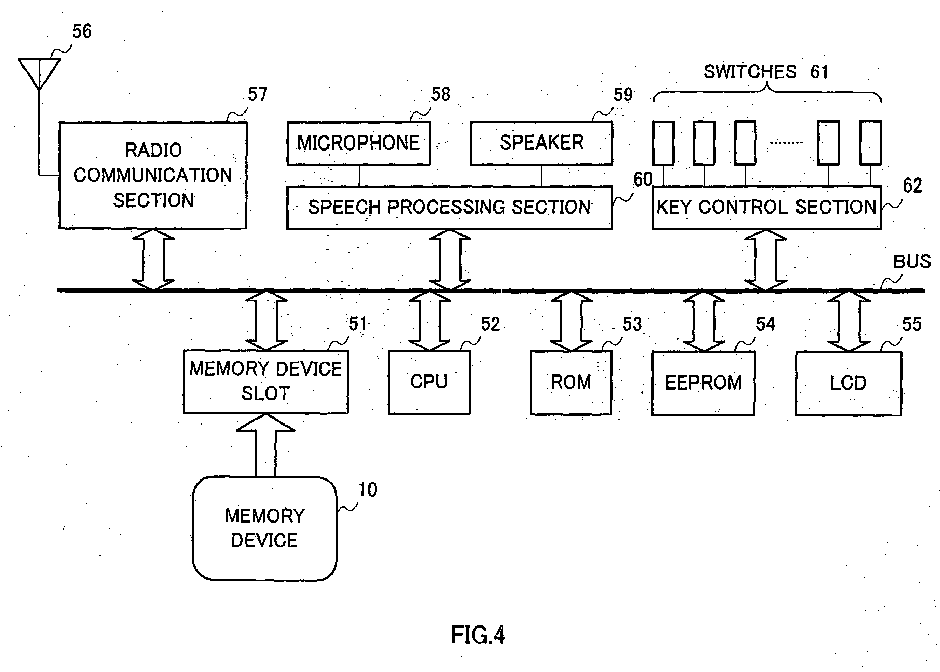

For example, as illustrated in FIG.4, cellular phone 20 has memory device slot 51 to which memory device 10 is inserted, radio communication section 57 that communicates with service server 30 via antenna 56, CPU 52 that controls the operation of cellular phone 20, ROM 53 that stores a program for specifying the operation of CPU 52, EEPROM 54 in which written is data to generate a key in the challenge/response scheme, liquid crystal display (LCD) screen 55, speech processing section 60 for microphone 58 and speaker 59, and key control section 62 for switches 61.

Service server 30 is, for example, an official site of a service provider that performs content distribution service. Service server 30 operated by the service provider is connected to carrier gateway (GW) 31 of a telecommunication carrier, and carrier GW 31 assures the authenticity of a telephone number of cellular phone 20 relayed to service server 30. In other words, only cellular phones under contract with the service provider are able to access to service server 30 of the official site.

In FIG.2, the service provider running service server 30 issues memory device 10 with a public key for service server 30 and secret key 13 of the memory device stored in tamper-resistant internal non-volatile memory 46.

In cellular phone 20, serial number 21 is stored in EEPROM 54, and application 22 that specifies the operation of mutual authentication is stored in ROM 53.

When memory device 10 is inserted into memory device slot 51 of cellular phone 20, memory device 10 and cellular phone 20 perform mutual authentication. When memory device 10 is not set for information for mutual authentication, cellular phone 20 connects to service server 30, and processing for initially setting memory device 10 for information for mutual authentication is executed according to following procedures.
① The service provider issues memory device 10.
② A user inserts memory device 10 which is not set for information for mutual authentication into cellular phone 20.
③ Application 22 of cellular phone 20 connects to service server 30 via carrier GW 31, and requests mutual authentication between memory device 10 and service server 30.
④ Service server 30 transmits Getchallenge (dynamic information issue command) that instructs issue of challenge (random numbers). The command is directly transmitted to memory device 10, by passing cellular phone 20. According to the command, memory device 10 generates challenge (random numbers) to transmit to service server 30. Service server 30 encrypts the random numbers using a server secret key to generate a response, and transmits the response and External Authenticate (external authentication command) that instructs authentication of service server 30 to memory device 10. Memory device 10 decodes the encrypted random numbers using server public key 11, and when there is no contradiction in the relationship between the response and challenge, authenticates service server 30 as a right party. Memory device 10 and service server 30 perform the same procedures from the inverse standpoint, and then service server 30 authenticates memory device 10. At this point, secret key 30 of memory device 10 is used. When the mutual authentication is completed, service servery 30 and memory device 10 establish a secret communication path therebetween using a secure message.
⑤ Service server 30 instructs application 22 to generate a key.
⑥ Upon accepting the instruction, application 22 instructs a user to input identification information via liquid crystal display (LCD) screen 55.
⑦ When the user inputs the identification information, application 22 generates the key from serial number 21 and identification information to transmit to service server 30.
⑧ Service server 30 transmits the key obtained from cellular phone 20 to transmit to memory device 10. Upon accepting the key information, memory device 10 stores the information in tamper-resistant internal non-volatile memory 46.

Thus, memory device 10 is set for key 12 as initial setting. Since key 12 is generated from serial number 21 of cellular phone 20 and identification information in mind of the user, even when a third party knows serial number 21 stored in cellular phone 20, the same key as key 12 cannot be generated.

Procedures will be described below of mutual authentication performed between memory device 10 and cellular phone 20 when memory device 10 which is set for key 12 is inserted into cellular phone 20.

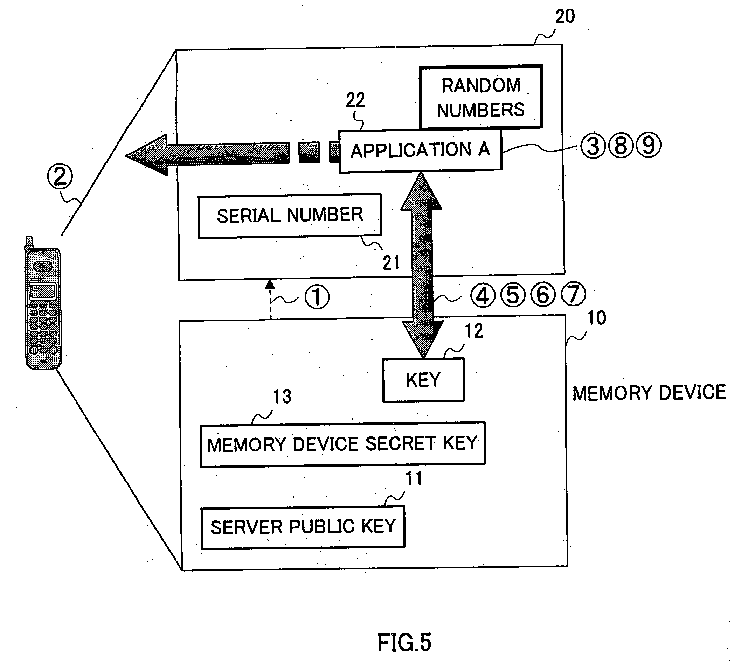

As illustrated in FIG.5:
① The user inserts memory device 10 into cellular phone 20.
② Application 22 outputs an instruction to input the identification information to the user via liquid crystal display (LCD) screen 55.
③ When the user inputs the identification information, application 22 generates the key from serial number 21 and the identification information,
④ Application 22 issues Getchallenge to memory device 10. Upon.receiving Getchallenge, memory device 10 generates random numbers for challenge to output to . application 22, and application 22 acquires the random numbers.
⑤ Application 22 encrypts the acquired random numbers for challenge using the key generated in ③.
⑥ Application 22 issues External Authenticate to memory device 10, and provides the random numbers for challenge encrypted in ⑤ to memory device 10.
⑦ Memory device 10 verifies the encrypted random numbers for challenge using key 12. Verifying is processing of performing decoding using key 12, and making a decision on conformity (principally, determining whether the matching is obtained) between the information (random numbers for challenge) obtained by decoding and the random numbers for challenge generated and held in memory device 10. When the conformity (matching) is obtained, the authentication succeeds. When the authentication succeeds, the access of cellular phone 20 is permitted. In addition, with respect to "matching", well-known methods on conformity decision and matching decision are widely included where the conformity is determined to be obtained when the matching is obtained on an arbitrary number of bits in upper, lower and medium bits even when the complete matchingis not obtained, as well as the matching on all the bits targeted for the decision.
   Further, memory device 10 and cellular phone 20 exchange the sides, and cellular phone 20 generates and encrypts random numbers. Cellular phone 20 sends the encrypted random numbers to memory device 10, and memory device 10 decodes the random numbers using the held secret key to send back to cellular phone 20.
⑧ When the external authentication succeeds in ⑦, application 22 stores random numbers 23 for challenge acquired in ④ in EEPROM 54. Random numbers 23 are used in next mutual authentication, instead of serial number 21.
⑨ Application 22 generates a key from random numbers 23 stored in EEPROM 54 and the identification information to write in memory device 10. Since the key information is transmitted from an authenticated party, memory device 10 accepts the key information to store in tamper-resistant internal non-volatile memory 46. Key 12 used in next mutual authentication.

When memory device 10 fails external authentication in ⑦, memory device 10 rejects access from cellular phone 20. and halts the operation.

In this way, in the device authentication system, a key is dynamically generated using the information stored in cellular phone 20 and identification information input from a user, and after initial setting, mutual authentication between memory device 10 and cellular phone 20 is performed in offline using the key. Therefore, since the key is not stored in cellular phone 20 that has no secure area, it is possible to prevent the key information from being read from cellular phone 20 improperly.

Further, since the key in first mutual authentication is used using information specific to cellular phone 20, devices capable of using memory device 10 are limited to cellular phones 20 that have the specific information.

Further, in second and subsequent mutual authentication, since a key is used that is generated from random numbers for challenge used in the last mutual authentication and identification information set by a user, the key changes every mutual authentication, and numerals for use in generating the key held in cellular phone 20 changes every mutual authentication. Therefore, even when copy attack is imposed such that the information exchanged between cellular phone 20 and memory device 10 is stolen, there is no fear that the identification information is decoded, and further, even when the numerals held in cellular phone 20 is stolen, there is no threat. Accordingly, it is possible to keep high security against fraud.

In addition, while the case is described herein that memory device 10 and cellular phone 20 perform mutual (i.e. two-way) authentication, one-way authentication may be performed where only memory device 10 authenticates cellular phone 20.

Further, while the case is described herein that the serial number is used as specific information of cellular phone 20, a telephone number may be used.

Furthermore, while the case is illustrated that cellular phone 20 encrypts random numbers provided from memory device 10 using the key, the inverse case may be possible that cellular phone 20 encrypts the key using the random numbers to provide to memory device 10. Also in this case, since memory device 10 knows the random numbers, memory device 10 is capable of extracting the key by decoding to collate with the key held in the device 10, and authenticating cellular phone 20.

Moreover, memory device 10 includes storage media having secure areas such as non-contact type IC cards, contact type IC cards, SD cards, and MMCs (multimedia cards).

The device authentication system may be modified as follows:
(1) Instead of a user storing identification information, the identification information set and registered by the user in initial setting is stored in a server including service server 30 except the cellular phone, and cellularphone 20 reads out the identification information from the sever when performing mutual authentication. In this case, the server stores the identification information set and registered in relation to the telephone number of cellular phone 20. At the time of mutual authentication with memory device 10, cellular phone 20 notifies the server of the telephone number, and acquires the identification information to generate akey.
   In this way, since a user does not need to keep the identification information in mind, the failure of authentication due to wrong input is eliminated. Further, in the initial setting, instead of a user setting and registering the identification information, application 22 generates the identification information to transmit to a server, and the server registers the information therewith, whereby the identification information is kept without the user knows the information, and it is possible to eliminate unauthorized access to memory device 10 by improper operation by the user.
(2) In the initial setting, a user stores the set and registered identification information in an external memory, and brings the external memory with the user separately from cellular phone 20. In device authentication, the user inserts the external memory to cellular phone 20, and application 22 reads out the identification information from the external memory to generate a key for mutual authentication. Examples used as the external memory include non-contact type IC cards, contact type IC cards, SD cards and MMCs.
(3) In the initial setting, cellular phone 20 communicates with an external device that a user holds, and stores identification information in the external device. In device authentication, application 22 communicates with the external device via cellular phone 20, acquires the identification information to generate a key, and performs device authentication. As the external device, for example, cellular phones and PDA are considered, and as communication means between cellular phone 20 and external device, infrared wireless and Bluetooth is considered. In this case, when a user holds the external device near cellular phone 2 0 for device authentication, 'cellular phone 20 reads out the identification information from the external device and thus the device authentication is performed.
(4) Further, it may be possible to encrypt identification information to store in cellular phone 20, and further store a decoding key for decoding the identification information in service server 30, external memory or external device, as described in items (1) to (3), respectively.
(5) Instead of performing initial setting of a key in memory device 10 online, it may be possible for an issue source of memory device 10 to issue memory device 10 with a key embedded therein. In this case, a user informs serial number 21 of cellular phone 20 and identification information to an issue source of memory device 10 by phone, or applies an issue of memory device 10 by indicating the serial number of cellular phone 20 and identification information at a store for releasing memory device 10. The issue source of memory device 10 generates a key from the information, and issues memory device 10 with the key embedded therein to the user.

Further, while this embodiment describes mutual authentication between cellular phone 20 without a secure area and memory device 10 with a secure area, target devices for mutual authentication are not limited to the phone 20 and device 10.

For example, the present invention is applicable to mutual authentication between network home appliances and memory devices inserted into respective appliances. In this case, a home server connected to each network home appliance plays a role as service server 30. In this system, as illustrated in modification (1) described previously, it is efficient that the home server collectively manages identification information for each network home appliance, and that each network home appliance acquires respective identification information from the home server in mutual authentication wiah the memory device.

Further, the device with a secure area is not limited to a memory device, and any device with a tamper-resistant area is available.

As is apparent from the foregoing, in the device authentication system and method of the present invention, it is possible to perform authentication with an entity that is a device without a secure area in safety and reliability.

7. Further, when applying the system and method to mutual authentication between a memory device and cellular phone, it is possible to limit, the use of data stored in the memory device to specific cellular phones.

The present invention is not limited to the above described embodiments, and various variations and modifications may be possible without departing from the scope of the present invention.

This application is based on the Japanese Patent Application No.2002-198719 filed on July 8, 2002, entire content of which is expressly incorporated by reference herein.

### Industrial Applicability

The present invention is ideally suited to the field of a device authentication system in which authentication is performed between devices.

## Claims

1. A device authentication system in which a first device (80) authenticates a second device (90),
wherein the first device (80) comprises:
a transmission/reception section (84) that transmits and receives information to/from the second device (90);
a first information holding section (81) that holds first authentication information in a secure area; and
a decider (82) that makes a decision on authentication,
the second device (90) comprises:
a transmission/reception section (91) that transmits and receives information to/from the first device (80);
a second information holding section (94) that holds second authentication information;
an information acquirer (95) that acquires third authentication information from outside of the second device (90); and
an authentication information generator (93) which generates fourth, authentication information from the second authentication information and the third authentication information, and outputs the fourth authentication information to the first device (80) through the transmission/reception section (91), and
the decider (82) makes a decision on conformity between the first authentication information and the fourth authentication information to authenticate the second device (90).

2. The device authentication system according to claim 1, wherein the second authentication information is information specific to the second device (90).

3. The device authentication system according to claim 1, wherein the second authentication information is random information generated in the first device (80).

4. The device authentication system according to claim 3, wherein the second authentication information is updated whenever the authentication processing is performed, and according to update of the second authentication information, the first authentication information held in the first information holding section (81) in the first device (80) is updated.

5. The device authentication system according to claim 1, wherein when the first device (80) does not hold the first authentication information, a device (30) that performs mutual authentication with the first device (80) acquires the fourth authentication information from the second device (90), and sets the first device (80) for the first authentication information as initial setting.

6. The device authentication system according to claim 1, wherein the third authentication information is held in a device (30) that performs mutual authentication with the first device (80), and is provided from the device (30) to the second device (90) in authentication processing.

7. A device authentication method in which a first device (80) authenticates a second device (90),
wherein the first device (80) holds first authentication information in a secure area,
the second device (90) that holds second authentication information generates fourth authentication information form the second authentication information and third authentication information provided from outside of the second device (90), and
the first device (80) makes a decision on conformity between the first authentication information and the fourth authentication information to authenticate the second device (90).

8. A second device (90) to be authenticated by a first device (80), comprising:
a transmission/reception section (91) that transmits and receives information, to/from the first device (80);
an information holding section (94) that holds second authentication information;
an information acquirer (95) that acquires third authentication information from outside of the second device (90); and
an authentication information generator (93) which generates fourth authentication information from the second authentication information and the third authentication information, and outputs the fourth authentication information to the first device (80) through the transmission/reception section (91).

9. The second device (90) according to claim 8, wherein the transmission/reception section (91) receives random information from the first device (80), and the authentication information generator (93) encrypts the random information using the fourth authentication information to transmit to the first device (80) through the transmission/reception section (91).

10. The seconddevice (90) according to claim 8, wherein the transmission/reception section (91) receives the random information from the first device (80), and the authentication information generator (93) encrypts the fourth authentication information using the random information to transmit to the first device (80) through the transmission/reception section (91).

11. The second device (90) according to claim 8, further comprising:
an update control section (92) that controls update of information required for processing for authentication,
wherein after authentication from the first device (80) succeeds, substituting for the second authentication information, the update control section (92) stores in the information holding section (94) the random information as new second authentication information, generates key information that is new authentication information from the third authentication information and the random information, and has the first device (80) hold the key information through the transmission/reception section (91).

12. The second device (90) according to claim 9, further comprising:
an update control section (92) that controls update of information required for processing for authentication,
wherein after authentication from the first device (80) succeeds, substituting for the second authentication information, the update control section (92) stores in the information holding section (94) the random information as new second authentication information, generates key information that is new authentication information from the third authentication information and the random information, and has the first device (80) hold the key information through the transmission/reception section (91).

13. The second device (90) according to claim 1 0 , further comprising:
an update control section (92) that controls update of information required for processing for authentication,
wherein after authentication from the first device (80) succeeds, substituting for the second authentication information, the update control section (92) stores in the information holding section (94) the random information as new second authentication information, generates key information that is new authentication information from the third authentication information and the random information, and has the first device (80) hold the key information through the transmission/reception section (91).

14. A first device (80) that authenticates a second device (90), comprising:
a transmission/reception section (84) that transmits and receives information to/from the second device (90);
an information holding section (81) that holds first authentication information in a secure area; and
a decider (82) that makes a decision on conformity between the fourth authentication information received in the transmission/reception section (84) and the first authentication information.

15. The firstidevice (80) according to claim 14, further comprising :
a random information generator (83) that generates random information to transmit to the second device (90) through the transmission/reception section (84),
wherein the decider (82) decodes information received in the transmission/reception section (84) using the first authentication information, and makes a decision on conformity between the decoded information and the random information.

16. The first device (80) according to claim 14 , further comprising:
a random information generator (83) that generates random information to transmit to the second device (90) through the transmission/reception section (84),
wherein the decider (82) decodes information receivedinthe transmission/reception section (84) using the random information, andmakes a decision on conformity between the decoded information and the first authentication information.

17. The first device (80) according to claim 14, wherein after authentication of the second device (90) succeeds, substituting for the first authentication information, the information holding section (81) holds key information that is new authentication information received in the transmission/reception section (84), as new first authentication information.

18. The first device (80) according to claim 15, wherein after authentication of the second device (90) succeeds, substituting for the first authentication information, the information holding section (81) holds key information that is new authentication information received in the transmission/reception section (84), as new first authentication information.

19. The first device ( 80) according to claim 16, wherein after authentication of the second device (90) succeeds, .substituting for the first authentication information, the information holding section (81) holds key information that is new authentication information received in the transmission/reception section (84), as new first authentication information.

20. A program for having a computer, which is integrated into a second device (90) to authenticated by a first device (80), execute the procedures of:
generating fourth authentication information from second authentication information that the second device (90) holds and third authentication information acquired from outside of the second device (90);
requesting an issue of random information to the first device (80); and
encrypting the random information received from the first device (80) using the fourth authentication information to output to the first device (80).
